# EUROPÄISCHE PATENTANMELDUNG

(11) **EP 2 982 441 A1**
(43) Veröffentlichungstag der Anmeldung: **10.02.2016**
(21) Anmeldenummer: 15179538.2
(22) Anmeldetag: 03.08.2015
(51) Int. Cl.: B01L 3/04, G01N 23/22, G01N 1/44

(54) **ABGEDECKTER TIEGEL FÜR ANALYSEOFEN**

(30) Priorität: 05.08.2014 DE 202014103624 U; 15.09.2014 DE 202014104362 U
(71) Anmelder: Fluxana GmbH & Co. Kg, 47551 Bedburg-Hau (DE)
(72) Erfinder: SCHRAMM, Rainer, 47551 Bedburg-Hau (DE)
(74) Vertreter: Habbel, Ludwig

(57) **Zusammenfassung**

Bei einer Tiegelanordnung zum Herstellen von Analyseproben einer Röntgenfluoreszenzanalyse, mit einem Tiegel (1), welcher eine obere Öffnung sowie ein Fassungsvermögen von einigen cm³ aufweist, wobei der Tiegel (1) kippbar ausgestaltet ist, derart, dass das im Tiegel (1) befindliche Probenmaterial mittels der Kippbewegung des Tiegels (1) aus dem Tiegel (1) in eine Auffangschale (19) füllbar ist, und mit einem die obere Öffnung des Tiegels (1) abdeckenden Deckel (9), schlägt die Erfindung vor, dass an dem Tiegel (1) ein der Deckel (9) verliersicher gehalten ist.

## Beschreibung

Die Erfindung betrifft eine Tiegelanordnung nach dem Oberbegriff des Anspruchs 1.

Aus der DE 27 02 818 B1 ist eine gattungsgemäße Tiegelanordnung bekannt. Bei der Röntgenfluoreszenzanalyse werden Tiegel aus hoch temperaturbeständigen Werkstoffen verwendet, sowie aus Werkstoffen, die möglichst reaktionsarm für die zu untersuchenden Materialien sind, so dass beispielsweise Tiegel aus Gold oder aus Platin Anwendung finden.

Die gattungsgemäße Tiegelanordnung wird nicht in einem geschlossenen Ofen betrieben, sondern auf einer offenen Brennstelle, bei der ein Gasbrenner den Tiegel von unten beheizt, um die Analyseprobe im Tiegel aufzuschmelzen. Ein zweiter Gasbrenner dient dazu, die bei der Röntgenfluoreszenzanalyse übliche Auffangschale vorzuwärmen, in welche die Schmelze eingefüllt wird, wenn der Tiegel entleert wird. Eine Halterung ist vorgesehen, die den Tiegel aufnimmt und mittels welcher der Tiegel aus einer aufrechten Schmelzstellung um mehr als 90° in eine liegende Entleerungsstellung gekippt werden kann. An dieser Halterung ist auch ein Deckel gehalten. Der Deckel weist hierzu einen Fortsatz in Form eines Stifts auf, welcher in ein Loch der Halterung eingesteckt wird. Die Halterung weist mehrere gelenkig gelagerte Halterungsstangen und Verbindungselemente sowie als Antrieb pneumatische Zylinder mit Kolbenstangen. Die Beweglichkeit der Halterung ermöglicht nämlich einerseits die gewünschten Bewegungen des Tiegels zwischen seiner Schmelzstellung und der Entleerungsstellung, und andererseits des Deckels zwischen einer Schließ- und einer Offenstellung. Da die Heizeinrichtung nicht als geschlossener Ofen, sondern als offene Brennstelle ausgestaltet ist, sind die Halterung und deren Antrieb nicht den hohen Schmelztemperaturen ausgesetzt. Zur Handhabung des Tiegels und des Deckels, wenn diese nämlich in die Heiz- bzw. Schmelzvorrichtung eingebracht bzw. aus dieser entnommen werden, werden die Gasbrenner abgestellt. Wärmeverluste wie beim Öffnen eines geschlossenen Ofens treten dabei nicht auf.

Eine gattungsfremde Tiegelanordnung ist beispielsweise aus der DE 10 2012 109 248 A1 bekannt. Die gattungsfremde Tiegelanordnung wird in einem Ofen betrieben, dessen Innenraum auf die zum Aufschmelzen der Analyseproben erforderliche Temperatur aufgeheizt wird, die üblicherweise zwischen 900°C und 1.400°C beträgt.

Aus der DE 102 24 464 A1 ist eine weitere gattungsfremde Behälteranordnung bekannt. Diese weist keinen Tiegel mit einem Fassungsvermögen von wenigen cm³ auf, sondern einen Garbehälter. Der Behälter dient nicht zur Herstellen von Analyseproben einer Röntgenfluoreszenzanalyse, sondern zur Zubereitung von Speisen. Der Behälter kann nicht zum Entleeren gekippt werden, vielmehr ist innerhalb eines ersten, größeren Behälters ein zweiter, kleiner Behälter - z. B. in Form eines Korbes - höhenbeweglich gelagert, so dass diese gattungsfremde Behälteranordnung beispielsweise als Friteuse ausgestaltet sein kann. Ein Deckel zum insbesondere druckdichten Verschließen des ersten, größeren Behälters ist um eine horizontale Achse schwenkbar gelagert, und dieses Schwenklager ist höhenverstellbar. Die Höhenverstellung des Deckels wird durch eine Gasdruckfeder ermöglicht, welche auch die Handhabung des Deckels erleichtert. Abgesehen davon, dass bei einem Garbehälter das Temperaturniveau bei weitem nicht erreicht wird, welches zum Herstellen von Analyseproben einer Röntgenfluoreszenzanalyse erforderlich ist, sind sowohl die Gasdruckfeder als auch das Schwenklager bei dieser gattungsfremden Behälteranordnung außerhalb des Behälters angeordnet, also den Gartemperaturen nicht ausgesetzt.

Der Erfindung liegt die Aufgabe zugrunde, eine gattungsgemäße Anordnung dahingehend zu verbessern, dass möglichst präzise Analyseergebnisse erhalten werden können, wobei die Anordnung so robust ausgestaltet ist, dass sie in einem geschlossenen Ofenraums eines Analyseofens verwendbar ist.

Diese Aufgabe wird durch eine Tiegelanordnung mit den Merkmalen des Anspruchs 1 gelöst. Vorteilhafte Ausgestaltungen sind in den Unteransprüchen beschrieben.

Die Erfindung schlägt mit anderen Worten vor, dass der Deckel an dem Tiegel gehalten ist. Grundsätzlich ist es vorteilhaft, dem Tiegel einen Deckel zuzuordnen, so dass der Tiegel, während er im Ofenraum des Analysenofens bewegt wird und die im Tiegel enthaltene Probe aufgeschmolzen wird, mittels des Deckels abgedeckt ist. Hierdurch wird erstens verhindert, dass bereits Aufgeschmolzenes oder auch noch festes, zum Beispiel körniges, Probenmaterial während der Bewegung des Tiegels aus dem Tiegel gelangt, beispielsweise aus dem Tiegel spritzt. Zudem werden Abbrandverluste flüchtiger Elemente, wie zum Beispiel der Abbrand von Schwefel oder von Halogenen deutlich herabgesetzt. Dadurch dass Materialverluste der Probe minimiert bzw. ausgeschlossen werden können, sowohl durch die erwähnten Spritzer als auch durch die Abbrandverluste, ergibt sich eine verbesserte Analysenpräzision in zweifacher Hinsicht: Dadurch, dass die Materialverluste in Form von Spritzern verhindert werden, wird das ursprüngliche als Probe verwendete Material in möglichst vollständigem Umfang beibehalten, d. h. Gewichtsverluste der Probe werden verhindert, die ansonsten je nach Zusammensetzung des jeweiligen Spritzers zu einer Verzerrung des Analysenergebnisses hinsichtlich der Zusammensetzung der Probe führen könnten. Dadurch, dass die Abbrandverluste verhindert werden, wird ebenfalls sichergestellt, dass die ursprüngliche Zusammensetzung des als Probe vorgelegten Materials möglichst unverändert beibehalten wird und so das spätere Analyseergebnis mit möglichst hoher Genauigkeit die tatsächliche Zusammensetzung der Probe wieder spiegelt. Schließlich wird durch den Deckel auch der Zutritt von Umgebungsatmosphäre in das Innere des Tiegels vermieden oder verringert, so dass beispielsweise unerwünschte Reaktionen von Sauerstoff mit dem Tiegelinhalt vermieden oder zumindest verringert werden können. Erste praktische Versuche haben ergeben, dass die Genauigkeit der Analysenergebnisse um ein Drittel verbessert werden konnte.

Vorschlagsgemäß ist vorgesehen, dass der Deckel nicht frei fliegend auf den Tiegel lediglich aufgelegt ist, sondern dass er an dem Tiegel verliersicher gehalten ist. Ein hoher apparativer Aufwand wird so vermieden, der ansonsten erforderlich wäre, um den Deckel mittels einer eigens vorgesehenen Einrichtung als separates Element zu handhaben, nämlich während des Schmelzvorgangs auf dem Tiegel zu halten und anschließend den Deckel zu öffnen, wenn der Tiegel gekippt und geleert werden soll. Insbesondere kann eine separate Halterung für den Deckel erübrigt werden. Eine separate Halterung wäre nur mit großem konstruktiven Aufwand und aus teuren Materialien herstellbar, da sie den hohen Temperaturen von 900°C bis 1.400°C standhalten müsste, was die Herstellungskosten und -je nach Verschleiß der Halterung - auch die Betriebskosten des Analyseofens nachteilig beeinflussen würde.

Dadurch, dass der Deckel vorschlagsgemäß am Tiegel gehalten ist, werden dieselben Vorteile ermöglicht wie bei einem frei fliegenden Deckel, der lediglich auf den Tiegel aufgelegt wäre, oder bei einem Deckel, der an einer separaten Halterung gehalten wäre. Hinzu kommt jedoch der Vorteil einer erheblich vereinfachten Handhabung und möglichst geringer Wärmeverluste:

Im Vergleich zu einem frei fliegenden Deckel braucht der Deckel nicht als loses Element gehandhabt zu werden, bevor der Tiegel gekippt und entleert werden kann, beispielsweise indem der Deckel erst vom Tiegel abgenommen werden müsste. Hierzu müsste entweder der Tiegel aus dem Analyseofen entnommen, so dass der der Tiegel mit der Umgebungsluft in Kontakt kommen und bereits vor der Entleerung abkühlen könnte. Angesichts der geringen Abmessungen des Tiegels, seiner guten Wärmeleitfähigkeit bei dem typischerweise verwendeten Werkstoff Platin, und angesichts der geringen Masse der Probe bzw. Schmelze sind nachteilige Einflüsse auf die Analysegenauigkeit nicht ausschließen, die umso größer sind, je länger der Tiegel samt Schmelze diesem Abkühlungseinfluss ausgesetzt ist, bevor die Schmelze in die Auffangschale eingefüllt ist.

Alternativ dazu könnte der Ofen zumindest so lange geöffnet werden, um vor einer Entleerung des Tiegels im Ofen auch die Handhabung des frei fliegenden Deckels innerhalb des Ofens zu ermöglichen, so dass in diesem Fall der Ofen vergleichsweise lange offen wäre und entsprechende Wärmeverluste aufträten. Diese sind nicht nur aufgrund der Energiekosten wirtschaftlich nachteilig, sondern erfordern auch einen längeren Zeitraum, um das Ofeninnere - mit einem neu eingestellten Tiegel samt Deckel und Analyseprobe - zum Schmelzen der Probe aufzuheizen, so dass die Leistungsfähigkeit des Ofens bzw. der Tiegelanordnung nachteilig beeinträchtigt wird, bezogen auf die Anzahl von Analysen, die innerhalb eines bestimmten Zeitraums durchgeführt werden können. Zudem ergäbe sich bei dieser Vorgehensweise ein längerer Zeitraum, in welchem der Tiegel vor seiner Entleerung nicht abgedeckt ist und unerwünschte chemische Einflüsse der Umgebungsluft bzw. der Ofenatmosphäre auf die Schmelze nicht auszuschließen sind.

Im Vergleich zu einem Deckel, der an einer separaten Halterung gehalten ist, die innerhalb des Ofens angeordnet ist, ermöglicht der vorschlagsgemäß am Tiegel gehaltene Deckel eine wirtschaftlich vorteilhafte, vergleichsweise einfache apparative Ausgestaltung des Ofens, da eine separate Halterung mit beweglichen Elementen, um den Deckel zu handhaben, nicht erforderlich ist. Die Handhabung des Deckels wird insofern vereinfacht, als zusammen mit Bewegungen des Tiegels auch der Deckel bewegt wird, ohne dass es hierzu eigener Antriebsmittel für den Deckel bedarf. Wie nachfolgend noch näher erläutert wird, kann zwar gemäß einer Ausgestaltung der Tiegelanordnung eine Bewegung des Deckels relativ zum Tiegel vorgesehen sein, bevor der Tiegel entleert wird, jedoch kann gemäß einer anderen Ausgestaltung auch auf eine solche Beweglichkeit verzichtet werden, ohne die Entleerung des Tiegels zu behindern. Zudem ist es nicht erforderlich, den Deckel an der separaten Halterung zu befestigen oder ihn von einer solchen Halterung zu demontieren, was bei Verwendung eines geschlossenen Ofens längere Offenzeiten des Ofens und damit unerwünschte Wärmeverluste bedeuten würde.

Dadurch, dass vorschlagsgemäß der Deckel verliersicher an dem Tiegel gehalten ist, kann der Tiegel mitsamt dem Deckel abgekippt werden. Hierdurch können entweder die Abkühlungseinflüsse verringert werden, sofern der Tiegel zur Entleerung aus dem Ofen entnommen wird. Oder der Tiegel kann sogar innerhalb des heißen Ofens abgekippt und entleert werden, so dass die Abkühlungseinflüsse nahezu vollständig vermieden werden können, denn wenn der Ofen geöffnet wird, um den Tiegel zu entleeren, stellt der Deckel ein Hindernis dar, welches den Kontakt von in den Ofen eindringender kühlerer Luft mit dem Inhalt des Tiegels behindert. Zudem kann der Tiegel innerhalb kürzester Zeit entleert werden, denn es ist keine vorherige Betätigung des Deckels erforderlich; dieser wird vielmehr mitsamt dem Tiegel bewegt. Auch werden Tiegel und Deckel gemeinsam gehandhabt, wenn der Tiegel in den Ofen eingestellt oder aus diesem entnommen wird, so dass der Ofen nur für vergleichsweise kurze Zeit offen stehen muss und dementsprechend Wärmeverluste gering gehalten werden können.

Vorteilhaft kann der Deckel relativ zum Tiegel beweglich sein, und zwar in der Art, dass er zwischen einer Schließstellung, in welcher er die Öffnung des Tiegels abdeckt, und einer Offenstellung beweglich ist, in welcher er die Entleerung des Tiegels ermöglicht. Der Deckel ist dabei verliersicher an dem Tiegel gehalten, indem er in seinen beiden Stellungen, also sowohl in seiner Schließstellung als auch in seiner Offenstellung jeweils am Tiegel gelagert ist, also geführt ist. Diese Lagerung kann beispielsweise in Art einer Schwenklagerung ausgeführt sein, so dass der Deckel gegenüber dem Tiegel gekippt werden kann und einen konischen Spalt bildet, der sich von der Lagerachse aus erweitert. Alternativ kann vorgesehen sein, dass der Deckel höhenbeweglich gegenüber dem Tiegel gelagert ist, so dass ein im Wesentlichen paralleler Spalt mit zunehmender Spaltbreite geschaffen wird je höher der Deckel gegenüber dem Tiegel angehoben wird. Eine Kombination dieser beiden Bewegungen kann zudem dadurch bewirkt werden, dass der Deckel entlang einer vorgegebenen Bahnkurve geführt wird, dadurch dass der Deckel geführt ist und in seinen beiden Schließ- und Offenstellungen gelagert ist, wird sichergestellt, dass der Deckel nicht aufgrund von zufälligen Bewegungsmöglichkeiten die Entleerung des Tiegels behindert und beispielsweise das Einfüllen der Schmelze in eine Auffangschale behindert.

Es kann vorgesehen sein, dass der Deckel nicht beweglich am Tiegel gelagert ist, sondern lediglich verliersicher an dem Tiegel gehalten ist.

Vorteilhaft kann jedoch vorgesehen sein, den Deckel am Tiegel zu lagern. Auf diese Weise ist besonders zuverlässig sichergestellt, dass die gewünschte Relativbewegung zwischen Deckel und Tiegel bei den Bewegungen des Deckels ausgeführt wird, da versehentliche Relativbewegungen zwischen Tiegel und Halterung in diesem Fall den Bewegungsablauf zwischen Deckel und Tiegel nicht beeinflussen können. Zudem kann auf diese Weise der Tiegel mitsamt dem Deckel gehandhabt werden, was das Einsetzen des Deckels in die Halterung erleichtern kann.

Vorteilhaft kann in an sich bekannter Weise der Tiegel zwei gegenüberliegende Vorsprünge aufweisen, welche eine Kippachse bilden, um welche der Tiegel zum Entleeren gekippt werden kann. Zur Lagerung des Deckels an einem solchen Tiegel kann vorgesehen sein, dass der Deckel zwei Führungsösen aufweist, die jeweils einen dieser beiden Vorsprünge umgreifen, so dass die Vorsprünge damit auch eine Kippachse für den Deckel bilden, insbesondere wenn diese beiden Führungsösen sich über die Vorsprünge hinaus weiter nach unten erstrecken, also länglich ausgestaltet sind, wird nicht nur eine Kippbewegung, sondern auch eine Höhenbeweglichkeit des Deckels gegenüber dem oberen Tiegelrand ermöglicht, so dass diese Entleerung des Tiegels besonders problemlos erfolgen kann und der Deckel während der Kippbewegung des Tiegels problemlos und allein Schwerkraft unterstützt von seiner Schließstellung in seine gewünschte Offenstellung gelangt.

Von den beiden Führungsösen kann vorteilhaft eine als geschlossene Öse ausgestaltet sein, während die zweite als offene Öse ausgestaltet ist, indem sie beispielsweise C-förmig oder J-förmig gebogen verläuft. Auf diese Weise wird eine Handhabung des Deckels erleichtert, indem der Deckel problemlos auf dem Tiegel aufgesetzt werden kann: Zunächst wird er mit seiner geschlossenen Führungsöse auf einen Vorsprung des Tiegels aufgefädelt und anschließend wird die zweite, offene Führungsöse über den zweiten Vorsprung geführt bzw. diesem zweiten Vorsprung angelegt. In umgekehrter Abfolge ist später eine unkomplizierte Entnahme des Deckels vom Tiegel möglich.

Vorteilhaft kann durch einen zusätzlichen Formschluss ein sicherer Halt des Deckels auf dem Tiegel unterstützt werden, so dass auch bei den Bewegungen, die der Tiegel ausführt, um das Probenmaterial in seinem Inneren zu durchmischen, ein sicherer Halt des Deckels auf dem Tiegel gewährleistet wird. Zu diesem Zweck weist der Deckel vorteilhaft eine Mulde auf, die sich in dem Tiegel erstreckt. Ein Deckelrand hingegen ist höher als die Mulde angeordnet und liegt auf der Wand des Tiegels auf, so dass auf diese Weise der Deckel auf dem Tiegel zentriert ist.

Vorteilhaft kann der Deckel eine Schütte aufweisen, also eine Art Rinne bilden, durch welche die Schmelze ablaufen kann, wenn der Tiegel in seine Entleerungsstellung gekippt ist. In der normalen Ausrichtung, also wenn die Öffnung des Tiegels nach oben weisend ausgerichtet ist, und der Deckel auf dem Tiegel aufliegt, ist die Schütte dementsprechend nach oben gewölbt. Wird der Tiegel jedoch in seine Entleerungsstellung gekippt und gerät der Deckel in seine Offenstellung, so bewirkt diese Schütte eine Führung der Schmelze, die aus dem Tiegel in die Auffangschale strömt.

Mittels der Schütte ist eine Öffnung zwischen Deckel und Tiegelrand geschaffen, die eine Entleerung und gegebenenfalls auch eine Befüllung des Tiegels ermöglicht, wenn der Deckel auf dem Tiegel aufliegt. Der Deckel kann in einer Ausgestaltung beweglich am Tiegel gelagert sein, wie weiter oben beschrieben. In einer zweiten Ausgestaltung kann er jedoch fest am Tiegel montiert sein, so dass die Entleerung und auch die Befüllung des Tiegels durch die Öffnung der Schütte erfolgt. In einer dritten Ausgestaltung kann vorgesehen sein, dass der Deckel zwar mit dem Tiegel in der Art verbunden ist, dass er daran verliersicher gehalten ist, dass er jedoch vom Tiegel gelöst werden kann, also vom Tiegel entfernt werden kann. So kann der Deckel zum Befüllen des Tiegels von diesem abgenommen werden, jedoch während des Entleerens auf dem Tiegel verbleiben.

Dabei muss die Rinne der Schütte nicht notwendigerweise einen nach unten gewölbten Querschnitt aufweisen, sondern je nach Schrägstellung des Deckels kann die Schütte auch senkrecht stehen oder ggf. sogar noch nicht einmal bis in die Senkrechte geschwenkt worden sein, so dass sie auch in der Offenstellung des Deckels und in der Entleerungsstellung des Tiegels nach wie vor einen nach oben gewölbten Querschnitt aufweist.

Alternativ zu einer rinnenartigen Ausgestaltung in Form der Schütte kann die Entleerung des Tiegels bei geschlossenem Deckel dadurch ermöglicht sein, dass der Deckel und / oder der Tiegel einfach eine Ausnehmung aufweisen, die in Fließrichtung der Schmelze an die Tiegelwand anschließt. Die Schmelze läuft folglich beim Kippen des Tiegels an der Tiegelwand entlang und gerät durch die Ausnehmung aus dem Tiegel heraus.

Wenn der Deckel eine Schütte aufweist und in an sich bekannter Weise der Tiegel ebenfalls eine Schütte aufweist, kann vorteilhaft vorgesehen sein, dass die Schütte des Deckels über der Schütte des Tiegels angeordnet ist, so dass beide Schütten zusammen einen nahezu rohrartigen Querschnitt bilden, durch den die Schmelze aus dem Tiegel in die Auffangschale geführt wird. Auch hierdurch werden Materialverluste vermieden, so dass auch hierdurch eine möglichst hohe Analysengenauigkeit unterstützt wird.

Durch den Deckel wird der Tiegel abgedeckt und der Zutritt von Sauerstoff in das Innere des Tiegels beeinträchtigt. Dies kann als Nachteil empfunden werden, wenn beispielsweise oxidierende Schmelzen erwünscht sind. Eine unkomplizierte, schnelle Handhabung des Deckels bei der Entfernung oder bei der Montage des Deckels unterstützt die wahlweise Benutzung des Tiegels mit oder ohne Deckel. Daher kann der Deckel vorteilhaft lösbar am Tiegel gehalten sein, auch wenn er vorschlagsgemäß verliersicher am Tiegel gehalten ist. Beispielsweise kann eine Scharnieranordnung Verwendung finden, welche die Lösbarkeit des einen von dem anderen der durch das Scharnier verbundenen Bauteile ermöglicht. Dem Fachmann sind dafür etliche Beispiele bekannt, so dass diese Ausgestaltung nicht näher erläutert werden muss.

Eine weitere Beeinträchtigung des Deckels beim Herstellen der Analysenproben kann darin gesehen werden, dass der Deckel eine Beobachtung der Schmelze verhindert. Aus diesem Grund kann vorteilhaft vorgesehen sein, dass der Deckel ein Fenster aufweist, welches die Betrachtung des Tiegelinhalts von oben ermöglicht. Dieses Fenster ist dabei nicht in Form eines Ausschnitts ausgestaltet, sondern aus einem transparenten Werkstoff, der einerseits Spritzer und andererseits Abbrandverluste verhindert und der jedoch andererseits durchsichtig ist, so dass nach wie vor ein Einblick in den Tiegel möglich ist und beispielsweise der Schmelzverlauf beobachtet werden kann.

Ein Ausführungsbeispiel der Erfindung wird anhand der rein schematischen Darstellungen nachfolgend näher erläutert. Dabei zeigt
- Fig. 1: einen Tiegel mit daran teilmontiertem Deckel,
- Fig. 2: den Deckel von Fig. 1 in gegenüber Fig. 1 größerem Maßstab und um 180° gedreht,
- Fig. 3: den Tiegel mit darauf befindlichem Deckel, und
- Fig. 4: die Tiegelanordnung während der Entleerung des Tiegels.

In den Zeichnungen ist mit 1 jeweils ein Tiegel bezeichnet, der eine Wand 2 und einen Boden 3 aufweist. Die Wand 2 wird nach oben durch einen oberen Rand 4 begrenzt. Der Tiegel 1 ist mit einem Ring 5 versehen, der an zwei gegenüberliegenden Stellen jeweils einen Vorsprung 6 aufweist und der weiterhin mit einer Handhabe 7 versehen ist. Der Handhabe 7 gegenüber ist die Wand 2 zu einer Schütte 8 geformt.

In an sich bekannter Weise kann der Tiegel 1 mit seinen beiden Vorsprüngen 6 in eine Halterung eingehängt werden und um die beiden Vorsprünge 6, die eine Schwenkachse bilden, geschwenkt bzw. gekippt werden. Wird der Tiegel 1 beispielsweise an der Handhabe 7 angehoben, so wird er um diese Schwenkachse, also um die beiden Vorsprünge 6, gekippt, so dass flüssige Schmelze aus dem Inneren des Tiegels 1 durch die Schütte 8 abfließen kann.

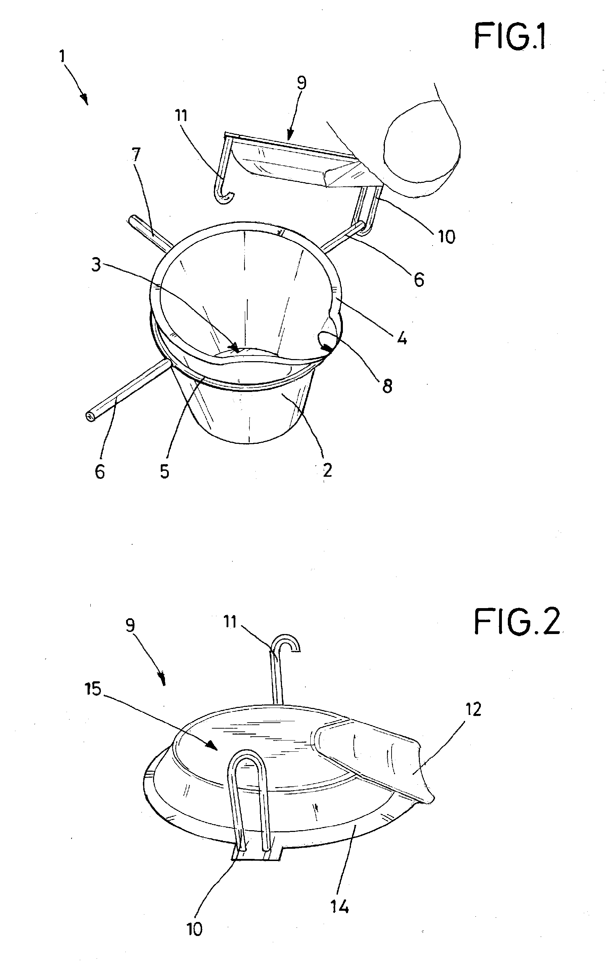

In Fig. 1 ist weiterhin ein Deckel 9 dargestellt, der zwei gegenüberliegend angeordnete Führungsösen 10 und 11 aufweist. Die erste Führungsöse 10 ist als geschlossene, langlochartige Führungsöse10 ausgestaltet, die sich von der Deckelfläche aus nach unten erstreckt und den in Fig. 1 rechten bzw. hinteren Vorsprung 6 umgreift. Die zweite Führungsöse 11 hingegen verläuft etwa J-förmig und ist insofern als offene Führungsöse 11 ausgestaltet. Fig. 1 zeigt, wie der Deckel 9 auf den Tiegel 1 aufgesetzt werden kann, indem zunächst der Deckel 9 mit seiner ersten geschlossenen Führungsöse 10 auf den rechten bzw. hinteren Vorsprung 6 aufgefädelt wird. Anschließend wird der Deckel 9 abgesenkt, wobei die offene Führungsöse 11 den linken bzw. vorderen Vorsprung 6 des Tiegels 1 untergreift. Dabei verläuft die Führungsöse 11 auf der Seite des Vorsprungs 6, die zur Handhabe 7 hin und von der Schütte 8 abgewandt ist.

Fig. 2 zeigt den Deckel 9 in einer um 180° gedrehten Ausrichtung, also mit nach oben weisenden Führungsösen 10 und 11. Dabei ist ersichtlich, dass der Deckel 9 ebenfalls eine Schütte aufweist, die in diesem Fall mit 12 gekennzeichnet ist. Weiterhin ist ersichtlich, dass der Deckel 9 einen umlaufenden Deckelrand 14 aufweist, an den auch die beiden Führungsösen 10 und 11 anschließen sowie eine Mulde 15, die nach unten eingezogen ist und sich dementsprechend in Fig. 2 nach oben wölbt.

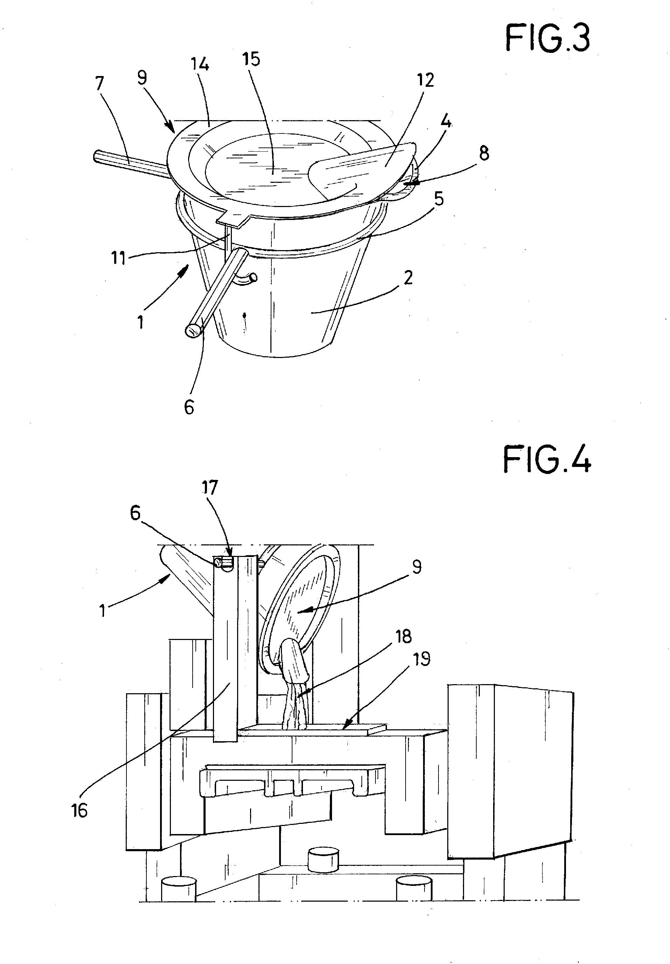

Fig. 3 zeigt den auf dem Tiegel 1 aufliegenden Deckel 9. Der Deckelrand 14 liegt auf dem Rand 4 des Tiegels 1 auf und die offene Führungsöse 11 liegt dem Vorsprung 6 auf der hinteren Seite an, also auf der Seite, die von der Schütte 8 abgewandt und der Handhabe 7 zugewandt ist. Die Schütte 12 des Deckels 9 ist über der Schütte 8 des Tiegels 1 angeordnet. Es ist ersichtlich, dass die offene Führungsöse 11 sich über den Vorsprung 6 hinaus nach unten erstreckt, so dass der Deckel 9 eine Höhenbeweglichkeit aufweist und gegenüber dem Tiegel 1 angehoben werden kann.

Fig. 4 zeigt die Tiegelanordnung, bestehend aus Tiegel 1 und Deckel 9, in einer Halterung 16, wobei diese Halterung 16 zwei Schlitze 17 aufweist, in welche die beiden Vorsprünge 6 eingehängt sind, so dass der gesamte Tiegel 1 kippbeweglich innerhalb der Halterung 16 gehalten ist. Dadurch dass die Handhabe 7 angehoben worden ist, ist der Tiegel 1 in seine Entleerungsstellung gekippt worden, so dass flüssige Schmelze 18 nun aus dem Tiegel 1 und durch die Schütte 12 des Deckels 9 nach unten in eine Auffangschale 19 fließt.

## Patentansprüche

1. Tiegelanordnung zum Herstellen von Analyseproben einer Röntgenfluoreszenzanalyse,
mit einem Tiegel (1), welcher eine obere Öffnung sowie ein Fassungsvermögen von einigen cm³ aufweist,
wobei der Tiegel (1) kippbar ausgestaltet ist, derart, dass das im Tiegel (1) befindliche Probenmaterial mittels der Kippbewegung des Tiegels (1) aus dem Tiegel (1) in eine Auffangschale (19) füllbar ist,
und mit einem die obere Öffnung des Tiegels (1) abdeckenden Deckel (9),
**dadurch gekennzeichnet,**
**dass** an dem Tiegel (1) der Deckel (9) verliersicher gehalten ist.

2. Tiegelanordnung nach Anspruch 1,
**dadurch gekennzeichnet,**
**dass** der Deckel (9) relativ zum Tiegel (1) beweglich ist, derart, dass er zwischen einer die Öffnung des Tiegels (1) abdeckenden Schließstellung und einer die Entleerung des Tiegels (1) ermöglichenden Offenstellung beweglich ist, und welcher in seinen beiden Schließ- und Offenstellungen an dem Tiegel (1) gelagert ist.

3. Tiegelanordnung nach Anspruch 1 oder 2,
**dadurch gekennzeichnet,**
**dass** der Deckel (9) relativ zum Tiegel (1) höhenbeweglich gelagert ist.

4. Tiegelanordnung nach einem der vorhergehenden Ansprüche 1 bis 3,
**dadurch gekennzeichnet,**
**dass** der Deckel (9) kippbeweglich am Tiegel (1) gelagert ist.

5. Tiegelanordnung nach Anspruch 4,
**dadurch gekennzeichnet,**
**dass** der Tiegel (1) zwei gegenüberliegende Vorsprünge (6) aufweist, welche eine Kippachse des Tiegels (1) bilden, und dass der Deckel (9) zwei Führungsösen (10, 11) aufweist, die jeweils einen Vorsprung (6) umgreifen.

6. Tiegelanordnung nach Anspruch 5,
**dadurch gekennzeichnet,**
**dass** eine erste Führungsöse (10) als geschlossene Öse ausgestaltet ist, und dass eine zweite Führungsöse (11) als offene, C-förmige oder J-förmige Öse ausgestaltet ist.

7. Tiegelanordnung nach einem der vorhergehenden Ansprüche,
**dadurch gekennzeichnet,**
**dass** der Deckel (9) eine Mulde (15) aufweist, die von einem Deckelrand (14) umgeben ist, wobei sich die Mulde (15) in den Tiegel (1) erstreckt, wenn der Deckel (9) mit dem Deckelrand (14) auf der die Öffnung umgebenden Wand (2) des Tiegels (1) aufliegt.

8. Tiegelanordnung nach einem der vorhergehenden Ansprüche,
**dadurch gekennzeichnet,**
**dass** der Deckel (9) eine nach oben gewölbte Schütte (12) aufweist, welche in der Offenstellung des Deckels (9) bei in eine Entleerungsstellung gekipptem Tiegel (1) eine Rinne für die aus dem Tiegel (1) fließende Schmelze (18) bildet.

9. Tiegelanordnung nach Anspruch 8,
**dadurch gekennzeichnet,**
**dass** der Tiegel (1) eine Schütte (8) aufweist,
und **dass** die Schütte (12) des Deckels (9) über der Schütte (8) des Tiegels (1) angeordnet ist.

10. Tiegelanordnung nach einem der vorhergehenden Ansprüche,
**dadurch gekennzeichnet,**
**dass** der Deckel (9) ein die Betrachtung des Tiegelinhalts von oben ermöglichendes Fenster aufweist.
